# EUROPEAN PATENT APPLICATION

(11) **EP 4 501 609 A1**
(43) Date of publication of application: **05.02.2025**
(21) Application number: 23774853.8
(22) Date of filing: 20.03.2023
(51) Int. Cl.: B29C 70/68, B29C 70/42

(54) **RIB-REINFORCED MOLDING AND METHOD FOR PRODUCING SAME**

(30) Priority: 25.03.2022 JP 2022050522; 25.03.2022 JP 2022050523
(71) Applicant: Kurashiki Boseki Kabushiki Kaisha, Kurashiki-shi, Okayama 710-0054 (JP)
(72) Inventor: HIRAISHI, Yoichi, Neyagawa-shi Osaka 572-0823 (JP); TANAKA, Tadaharu, Neyagawa-shi Osaka 572-0823 (JP); TAKANO, Naoya, Neyagawa-shi Osaka 572-0823 (JP); IIO, Hayato, Neyagawa-shi Osaka 572-0823 (JP); NAKAME, Yuta, Neyagawa-shi Osaka 572-0823 (JP); YOKOTA, Katsuhiko, Neyagawa-shi Osaka 572-0823 (JP)
(74) Representative: Diehl & Partner
(86) International application number: PCT/JP2023/010832
(87) International publication number: WO 2023/182258

(57) **Abstract**

An aspect of a rib-reinforced molded product of the present invention is an integrally molded product of a reinforcing rib 53 and a molded main body 52 containing a resin. The reinforcing rib protrudes from one principal surface of the molded main body. Another aspect of a rib-reinforced molded product of the present invention includes a laminated base material composed of a plurality of base material layers, and a rib member that serves as a reinforcing rib. The rib member contains reinforcing fibers and a thermoplastic resin and is disposed inside the laminated base material A ridge that corresponds to the contour of the rib member 300 is formed on one principal surface of the rib-reinforced molded product. The reinforcing rib contains reinforcing fibers and a thermoplastic resin, and the reinforcing fibers include continuous fibers that are arranged in the longitudinal direction of the reinforcing rib. The reinforcing rib is preferably a fiber-reinforced resin pultruded product that is configured such that a fiber sheet containing a resin is folded into an irregular shape, and the resin fills the inside of the folded fiber sheet and the spaces between overlapping portions of the folded fiber sheet and is integrated with the fiber sheet

## Description

### Technical Field

The present invention relates to a rib-reinforced molded product and a method for producing the same.

### Background Art

Carbon fibers are used as a reinforcing fiber material and combined with a variety of matrix resins into fiber-reinforced plastics. These fiberreinforced plastics are widely used in various fields and applications. In the aerospace and general industrial fields where high mechanical properties, high heat resistance, etc., are required, unidirectional continuous fibers are used along with a thermoplastic resin that serves as a matrix resin

A conventional composite material of a resin and unidirectional continuous fibers is, e.g., a prepreg that is obtained by fully impregnating a carbon fiber base material with resin. There have been techniques to improve flexural performance and impact resistance of a molded product made of such a composite material. Patent Document 1 proposes a molded product that is produced by impregnating strengthening fibers with a matrix resin to form a prepreg, injection molding a thermoplastic resin into a lattice shape on one surface of the prepreg, and joining and integrating the lattice-shaped reinforcing ribs with the prepreg. Patent Document 2 discloses a carbon fiber composite molded product that is produced by injection molding a thermoplastic resin layer with a thickness of 0.01 to 30 mm onto the surface and/or the intermediate layer of a single- or multi-layer flexible carbon fiber composite material plate with a thickness of 0.01 to 2.0 mm, and joining and integrating the thermoplastic resin layer with the carbon fiber composite material plate. Patent Document 3 proposes a molded product that is produced by impregnating strengthening fibers with a matrix resin to form a prepreg, heating the prepreg in a die, injecting a molten thermoplastic resin into the die to fill a groove, and integrally molding the injection-molded reinforcing ribs with the prepreg.

### Prior Art Documents

### Patent Documents

Patent Document 1: JP 2010-253802 A
Patent Document 2: JP H06-015687 A
Patent Document 3: WO 2016-159118 A1

### Disclosure of Invention

### Problem to be Solved by the Invention

There is still a great demand for miniaturization of products made of fiber-reinforced plastics, particularly fiber-reinforced thermoplastics (FRTP). As a matter of course, such fiber-reinforced thermoplastics are required to be thin. In order to compensate for a decrease in rigidity due to the reduced thickness of the fiber-reinforced thermoplastics, reinforcing ribs may be provided. However, in the above conventional techniques, the reinforcing ribs themselves have problems with strength and rigidity, making it difficult to form a molded product with high strength and high rigidity.

The present invention provides a rib-reinforced molded product that is thin, but still has high strength and high rigidity, and a method for producing the rib-reinforced molded product.

### Means for Solving Problem

An aspect of the present invention relates to a rib-reinforced molded product that is an integrally molded product of a reinforcing rib and a molded main body containing a resin. The reinforcing rib contains reinforcing fibers and a thermoplastic resin. The reinforcing fibers include continuous fibers that are arranged in a longitudinal direction of the reinforcing rib.

An aspect of the present invention relates to an example of a method for producing the rib-reinforced molded product of the present invention. The method includes performing vacuum pressure molding or injection molding, thereby molding a molded main body and a reinforcing rib in one piece. The vacuum pressure molding includes: heating and softening a stack in which a reinforcing rib is disposed on a material that makes up a molded main body containing a resin; vacuum molding the stack in a lower die having a vacuum line; and pressure pressing the stack with compressed air supplied from an upper die having a pressure line to the lower die. The injection molding includes: positioning the reinforcing rib in a cavity of a molding die; and subsequently injecting the material that makes up a molded main body, including a molten resin, into the cavity.

An aspect of the present invention relates to another example of a method for producing the rib-reinforced molded product of the present invention. The method includes: arranging a plurality of base material sheets in layers, each of which is a material of a base material layer that contains a resin and makes up a molded main body; disposing a rib member as a reinforcing rib between any two adjacent layers of the base material sheets, the rib member containing reinforcing fibers and a thermoplastic resin; and molding the rib member and the layered base material sheets in one piece by vacuum molding, pressure molding, or vacuum pressure molding so that a ridge that corresponds to a contour of the rib member is formed on one principal surface of the rib-reinforced molded product.

### Effect of the Invention

The rib-reinforced molded product of the present invention includes the reinforcing rib that is integrally molded with the molded main body containing a resin. The reinforcing fibers constituting the reinforcing rib include continuous fibers that are arranged in the longitudinal direction of the reinforcing rib. Therefore, the reinforcing rib itself has high strength and high rigidity. This can provide a rib-reinforced molded product with high strength and high rigidity even if the molded main body is thin.

In an example of the production method of the rib-reinforced molded product of the present invention, the reinforcing rib and the material that makes up a molded main body can be molded in one piece by vacuum pressure molding or injection molding in addition to the general hot press molding. Therefore, this method can produce the rib-reinforced molded product efficiently.

In another example of the production method of the rib-reinforced molded product of the present invention, a plurality of base material sheets are arranged in layers, each of which contains a resin, and the rib member containing reinforcing fibers and a thermoplastic resin is disposed between any two adjacent layers of the base material sheets. The rib member and the layered base material sheets are molded in one piece by vacuum molding, pressure molding, or vacuum pressure molding. Therefore, this method can provide the rib-reinforced molded product of the present invention with high strength, high rigidity, and various shapes.

### Brief Description of Drawings

[FIG. 1] FIGS. 1A to 1C are each a schematic cross-sectional view of a rib-reinforced molded product in an aspect of the present invention.
[FIG. 2] FIG. 2 is a schematic underside view of a rib-reinforced molded product in another aspect of the present invention.
[FIG. 3] FIG. 3 is a schematic underside view of a rib-reinforced molded product in another aspect of the present invention.
[FIG. 4] FIG. 4 is a schematic underside view of a rib-reinforced molded product in another aspect of the present invention.
[FIG. 5] FIG. 5 is a schematic perspective view of a rib-reinforced molded product in another aspect of the present invention.
[FIG. 6] FIG. 6 is a schematic cross-sectional view of a vacuum pressure molding machine used in a method for producing a rib-reinforced molded product in another aspect of the present invention.
[FIG. 7] FIG. 7 is a schematic process diagram illustrating a step in a method for producing a rib-reinforced molded product in an aspect of the present invention.
[FIG. 8] FIG. 8 is a schematic process diagram illustrating a step in a method for producing a rib-reinforced molded product in an aspect of the present invention.
[FIG. 9] FIG. 9A to 9C are schematic process diagrams illustrating a step in a method for producing a rib-reinforced molded product in another aspect of the present invention.
[FIG. 10] FIG. 10 is a schematic perspective view of a semi-preg sheet used to produce a rib-reinforced molded product in an aspect of the present invention.
[FIG. 11] FIG. 11 is a schematic cross-sectional view of the semi-preg sheet in FIG. 10, taken along the width direction.
[FIG. 12] FIG. 12 is a schematic process diagram illustrating a method for producing the semi-preg sheet in FIG. 10.
[FIG. 13] FIG. 13A is a schematic perspective view of a fiber-reinforced resin pultruded product used to produce a rib-reinforced molded product in an aspect of the present invention. FIG. 13B is a schematic cross-sectional view of the fiber-reinforced resin pultruded product.
[FIG. 14] FIG. 14 is a schematic process diagram illustrating an example of a method for producing a fiber-reinforced resin pultruded product used to produce a rib-reinforced molded product in an aspect of the present invention.
[FIG. 15] FIG. 15A, 15B, and 15C are schematic diagrams illustrating feeding of a folded fiber sheet, a wound fiber sheet, and a stack of strip-shaped fiber sheets, respectively, to a heating section of a pultrusion die in an example of a method for producing a fiber-reinforced resin pultruded product used to produce a rib-reinforced molded product in an aspect of the present invention.
[FIG. 16] FIG. 16 is a schematic perspective view of a rib-reinforced molded product in another aspect of the present invention.
[FIG. 17] FIG. 17 is a schematic partially enlarged cross-sectional view of the rib-reinforced molded product in FIG. 16.
[FIG. 18] FIG. 18 is a schematic process diagram illustrating a step in a method for producing a rib-reinforced molded product in an aspect of the present invention.
[FIG. 19] FIG. 19 is a schematic process diagram illustrating a step in a method for producing a rib-reinforced molded product in an aspect of the present invention.
[FIG. 20] FIG. 20 is a photograph of a rib-reinforced molded product of Example 3.

### Description of the Invention

### [Ebmbodiment 1]

The present invention relates to a rib-reinforced molded product that is an integrally molded product of a reinforcing rib and a molded main body containing a resin The reinforcing rib contains a thermoplastic resin and can be integrally molded with a material that makes up the molded main body containing a resin. Moreover, the reinforcing rib contains, as reinforcing fibers, continuous fibers that are arranged in the longitudinal direction of the reinforcing rib. Therefore, the reinforcing rib itself has high strength and high rigidity. The phrase "arranged in the longitudinal direction of the reinforcing rib" as used herein means that the longitudinal direction of the continuous fibers as a whole is along the longitudinal direction of the reinforcing rib. The "continuous fibers that are arranged in the longitudinal direction of the reinforcing rib" are not limited to the continuous fibers that are linearly arranged in the longitudinal direction of the reinforcing rib, but also include the continuous fibers that are arranged in a spiral or zigzag fashion.

The reinforcing rib is preferably a fiber-reinforced resin pultruded product (also abbreviated as a "pultruded product" in the following) that has been formed before being integrally molded with the material of the molded main body. The pultruded product is preferably obtained by pultruding a fiber sheet so that the fiber sheet is folded into, e.g., an irregular shape, filling the inside of the folded fiber sheet and the spaces between overlapping portions of the folded fiber sheet with a resin, and integrating the resin with the fiber sheet. The converged fiber sheet is allowed to pass through a die (pultrusion die) to form the pultruded product. This pultruded product is solid because the fiber sheet is irregularly folded within the pultruded product, and the thermoplastic resin constituting the fiber sheet melts and fills the inside of the fiber sheet and the spaces between overlapping portions of the fiber sheet, thereby functioning as a matrix resin. The term "fill" as used herein means that the thermoplastic resin is impregnated into the fiber sheet and occupies the spaces between overlapping portions of the fiber sheet. The pultruded product thus formed has few voids. Moreover, since the fiber sheet is irregularly folded within the pultruded product, there will be non-directional and uniform stress on the cross section perpendicular to the longitudinal direction of the pultruded product. Thus, the pultruded product is suitable as a reinforcing material.

The fiber sheet is preferably a semi-preg sheet that contains reinforcing fibers and a thermoplastic resin, that is highly flexible, and that is unimpregnated with resin and/or semi-impregnated with resin. This is because the pultrusion properties are good. The fiber sheet is more preferably a semi-preg sheet in which a thermoplastic powder resin serving as a matrix is fused to the fiber surface of the fiber sheet. The use of this semi-preg sheet makes the pultrusion properties better and enables continuous molding of the pultruded product. In terms of improving the strength and rigidity of the rib-reinforced molded product, the fiber sheet is further preferably a semi-preg sheet in which a thermoplastic powder resin that will be a matrix of the pultruded product to be formed is fused to the fiber surface of unidirectional continuous fibers (spread fiber sheet) obtained by spreading a group of continuous fibers (reinforcing fibers) and aligning the continuous fibers in parallel in one direction. The pultrusion method is a versatile molding method and can form pultruded products of various shapes, which have good secondary processability and can easily be processed into curved linear objects or parts such as rivets.

The reinforcing fibers constituting the pultruded product may be either or both of short fibers and continuous fibers. In particular, the reinforcing fibers preferably include at least one type of continuous fibers selected from the group consisting of carbon fibers, glass fibers, and highly elastic fibers with an elastic modulus of 380 cN/dtex or more. Examples of the highly elastic fibers include aramid fibers, particularly para-aramid fibers (elastic modulus: 380 to 980 cN/dtex), polyarylate fibers (elastic modulus: 600 to 741 cN/dtex), heterocyclic polymer (PBO, elastic modulus: 1060 to 2200 cN/dtex) fibers, high molecular weight polyethylene fibers (elastic modulus: 883 to 1413 cN/dtex), and polyvinyl alcohol fibers (PVA, strength: 14 to 18 cN/dtex). These fibers are useful as resin reinforcing fibers. The carbon fibers are particularly useful in terms of weight reduction.

Examples of the thermoplastic resin constituting the fiber sheet include, but are not limited to, polyamide-based resin, polycarbonate-based resin, polypropylene-based resin, polyester-based resin, polyethylene-based resin, acrylic-based resin, phenoxy-based resin, polystyrene-based resin, polyimide-based resin, polyetheretherketone-based resin, and polyphenylene sulfide resin. In terms of the moldability of the rib-reinforced molded product, the thermoplastic resin contained in the fiber sheet preferably has a higher softening point than the resin constituting the molded main body.

The reinforcing rib is preferably at least one type of rod selected from the group consisting of a square rod, a round rod, a flat rod, and a plate-like rod. The cross section of the pultruded product can be in various shapes in accordance with the shape of the die used in the production process of the pultruded product.

The molded main body may be composed of only resin, but preferably contains strengthening fibers in terms of improving the strength and rigidity of the rib-reinforced molded product. The strengthening fibers may be either or both of short fibers and continuous fibers. The resin contained in the molded main body may be either a thermosetting resin or a thermoplastic resin, but is preferably a thermoplastic resin. Examples of the thermoplastic resin include, but are not limited to, polyamide-based resin, polycarbonate-based resin, polypropylene-based resin, polyester-based resin, polyethylene-based resin, acrylic-based resin, phenoxy resin, polystyrene-based resin, polyimide-based resin, and polyetheretherketone-based resin. When the molded main body contains the strengthening fibers, the proportions of the resin and the strengthening fibers are as follows, provided that the total of the resin and the strengthening fibers is 100% by volume: the volume fraction (Vf) of the strengthening fibers is preferably 20 to 65% by volume and the volume fraction of the thermoplastic resin is preferably 35 to 80% by volume; and the volume fraction (Vf) of the strengthening fibers is more preferably 25 to 60% by volume and the volume fraction of the thermoplastic resin is more preferably 40 to 75% by volume. The strengthening fibers preferably include at least one type of fibers selected from the group consisting of carbon fibers, glass fibers, and highly elastic fibers with an elastic modulus of 380 cN/dtex or more. Specific examples of the highly elastic fibers are the same as those of the highly elastic fibers listed for the reinforcing fibers.

The molded main body may be composed of a single layer of a fiber-reinforced resin sheet containing the strengthening fibers or multiple layers of the fiber-reinforced resin sheets that are integrated together. The fiber-reinforced resin sheet, which is the material of the molded main body, may be either a prepreg sheet or a semi-preg sheet. To achieve both thin thickness and high strength for the rib-reinforced molded product, the fiber-reinforced resin sheet is preferably a semi-preg sheet in which a thermoplastic powder resin is fused to the fiber surface of unidirectional continuous fibers (spread fiber sheet) obtained by spreading a group of continuous fibers and aligning the continuous fibers in parallel in one direction. The continuous fibers are preferably carbon fibers in terms of weight reduction.

The rib-reinforced molded product is preferably a hot press molded product, a vacuum molded product, a pressure molded product, a vacuum pressure molded product, or an injection molded product. As an example of a method for producing the rib-reinforced molded product of the present invention, the reinforcing rib and the molded main body can be molded in one piece by at least one molding method selected from the group consisting of hot press molding, vacuum molding, pressure molding, and vacuum pressure molding. This molding method is preferably any one of vacuum molding, pressure molding, and vacuum pressure molding, and particularly preferably vacuum pressure molding.

The vacuum pressure molding is a molding method that includes, e.g., creating a vacuum between a lower die having a vacuum line and a molding material that has been heated and softened, sucking the molding material down into the lower die (vacuum molding), and pressing the heated and softened molding material against the lower die with compressed air supplied from an upper die having a pressure line to the lower die (pressure pressing). When the material of the molded main body is, e.g., a single layer of the semi-preg sheet or multiple layers of the semi-preg sheets, the resin constituting the semi-preg sheet fills the inside of the semi-preg sheet and the space between the adjacent semi-preg sheets, and thus functions as a matrix resin of the molded main body. Consequently, one or more than one semi-preg sheet will be the molded main body, and the molded main body and the reinforcing rib can be integrated. The vacuum pressure molding can shape the molding material into various forms while integrating the molding material, and therefore is suitable as a molding method of a thin molded product.

Injection molding, which is also referred to as in-mold molding, has a high molding speed and can mold a thermoplastic resin or a thermoplastic resin containing short fibers at a high molding speed.

The hot press molding may be performed in the following manner. For example, a reinforcing rib is placed in a lower die having a groove for positioning the reinforcing rib, and a plurality of the semi-preg sheets are stacked on the reinforcing rib. Then, the reinforcing rib and the semi-preg sheets are sandwiched and pressed between the heated lower die and the heated upper die. This molding method can improve the positional accuracy of the reinforcing rib.

The method for producing the rib-reinforced molded product of the present invention preferably includes: heating and softening a stack in which a reinforcing rib is disposed on top of multiple layers of the semi-preg sheets; vacuum molding the stack in a lower die having a vacuum line; and pressure molding the stack with compressed air supplied from an upper die having a pressure line to the lower die. Specifically, the rib-reinforced molded product is preferably produced by a method including the following steps (a) to (d) using a vacuum pressure molding machine that includes the lower die, a bagging film, and the upper die:
(a) a step of placing the stack in the lower die, subsequently covering the lower die with the bagging film, and forming a closed space between the bagging film and the lower die, in which a vacuum atmosphere can be created;
(b) a step of reducing the pressure in the closed space from the vacuum line, bringing the stack into close contact with the lower die, and increasing the temperature of the lower die;
(c) a step (vacuum pressure molding step) of heating the stack to a temperature equal to or higher than the softening point of the resin contained in the semi-preg sheets and pressing the stack against the lower die by supplying compressed air from the upper die located above the bagging film to the lower die, while maintaining the pressure conditions in the step (b); and
(d) a step of cooling the resulting molded product while maintaining the pressure conditions in the step (c), and demolding the cooled molded product.

The bagging film is also called a vacuum bagging film.

In the step (a), the stack is placed in the lower die with the semi-preg sheets facing the lower die.

The temperature equal to or higher than the softening point is a temperature at which the resin softens or melts.

In the production method of the rib-reinforced molded product of the present invention, the reinforcing rib is preferably a fiber-reinforced resin pultruded product that is obtained by pultrusion of a fiber sheet The fiber sheet is preferably a semi-preg sheet in which a thermoplastic powder resin is fused to the surface of unidirectional continuous fibers obtained by spreading a group of continuous fibers and aligning the continuous fibers in parallel in one direction. An aspect of a method for producing the fiber-reinforced resin pultruded product preferably includes the following:
converging the fiber sheet and feeding the converged fiber sheet into a heating section of a pultrusion die;
compressing the fiber sheet while heating the fiber sheet to a temperature equal to or higher than a melting point or a resin flow temperature of the thermoplastic resin in the heating section;
molding the compressed fiber sheet in a molding section of the pultrusion die;
cooling the molded product in a cooling section of the pultrusion die to provide a pultruded product; and
pulling the pultruded product out of the pultrusion die.

### [Pultruded product]

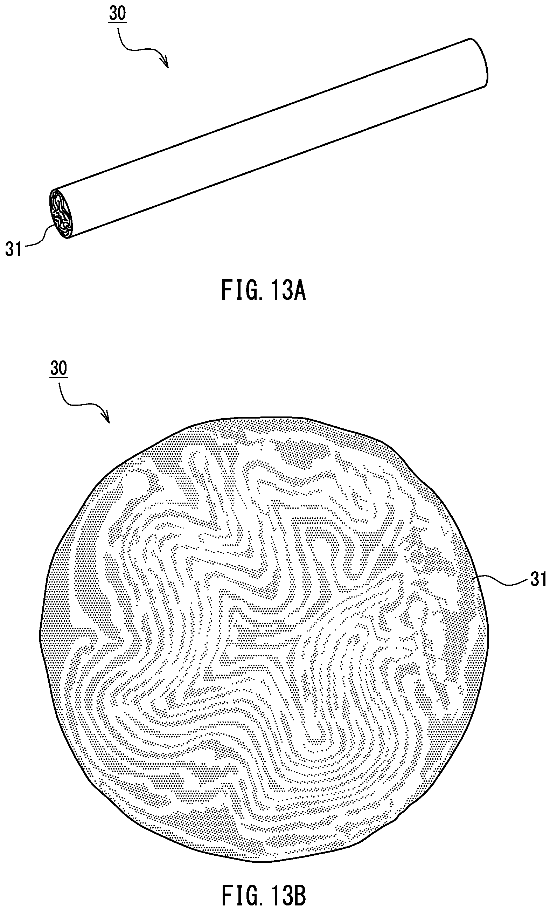

Hereinafter, a pultruded product, which is a preferred example of the reinforcing rib used to form the rib-reinforced molded product of the present invention, will be described in more detail with reference to FIGS. 13 to 15.

FIG. 13A is a schematic perspective view of a fiber-reinforced resin pultruded product used in an aspect of the present invention. FIG. 13B is a schematic cross-sectional view of the fiber-reinforced resin pultruded product. A pultruded product 30 is a rod-shaped molded product, and a fiber sheet is folded into an irregular shape in cross section. A thermoplastic resin fills the inside of the fiber sheet and the spaces between overlapping portions of the fiber sheet and is integrated with the fiber sheet In FIG. 13B, a matrix resin component 31 of the pultruded product 30 is a thermoplastic resin; the fiber sheet is impregnated with the thermoplastic resin and the spaces between overlapping portions of the fiber sheet are also filled with the thermoplastic resin.

The pultruded product has a pultrusion mark on the surface. Moreover, at least some of the fibers constituting the fiber sheet, which is the material of the pultruded product, are present on the surface of the pultruded product. When the fiber sheet is converged and pulled through a die, a pultrusion mark remains on the surface of the resulting molded product. The pultrusion mark makes it possible to determine whether the fiber sheet has been pultruded or not

The fiber sheet, which is the material of the pultruded product 30, contains a resin and strengthening fibers in the following proportions, provided that the total of the resin and the strengthening fibers is 100% by volume: the volume fraction (Vf) of the reinforcing fibers is preferably 20 to 70% by volume and the volume fraction of the thermoplastic resin is preferably 30 to 80% by volume; and the volume fraction (Vf) of the reinforcing fibers is more preferably 25 to 60% by volume and the volume fraction of the thermoplastic resin is more preferably 40 to 75% by volume. This allows the resin component of the fiber sheet to be directly used as the matrix resin component 31 of the pultruded product 30, and eliminates the necessity of adding new resin during the production of the pultruded product 30.

The pultruded product 30 is continuous or is cut to a predetermined length. The cross-sectional diameter or thickness of the pultruded product is preferably 0.2 to 15 mm, and more preferably 1 to 10 mm. The pultruded product 30 may have any cross-sectional shape such as round, square, C-shape, H-shape, or L-shape. The pultruded product 30 may be, e.g., in a linear, rod, or plate form.

The fiber sheet is preferably a semi-preg sheet in which a thermoplastic powder resin that will be a matrix resin of the pultruded product is applied and thermally fused to the surface of the unidirectional continuous fibers. When this semi-preg sheet is molded, the thermoplastic resin on the surface fills the inside of the fiber sheet and the spaces between overlapping portions of the fiber sheet. The pultruded product thus obtained can have excellent formability (moldability) and few voids.

It is more preferable that the fiber sheet contains bridging fibers as secondary fibers extending in directions that cross the unidirectional continuous fibers, and that the thermoplastic resin integrates the unidirectional continuous fibers with the bridging fibers. The primary fibers constituting the fiber sheet are the unidirectional continuous fibers that have been spread and aligned in parallel in one direction. The thermoplastic resin used to form the fiber sheet is preferably a powder. It is preferable that the thermoplastic powder resin is applied to the unidirectional continuous fibers and the bridging fibers from above, is thermally fused to the surface of the unidirectional continuous fibers or its vicinity, and integrates the unidirectional continuous fibers with the bridging fibers. Since the unidirectional continuous fibers and the bridging fibers are integrated by the thermally fused thermoplastic resin, the fiber sheet has good handleability and also good operability when converged, pultruded, and heat molded

The mass fraction of the unidirectional continuous fibers is preferably 75 to 99% by mass, more preferably 80 to 97% by mass, and further preferably 85 to 97% by mass and the mass fraction of the bridging fibers is preferably 1 to 25% by mass, more preferably 3 to 20% by mass, and further preferably 3 to 15% by mass, provided that the total of the unidirectional continuous fibers and the bridging fibers in the fiber sheet is 100% by mass. When the mass fractions of these fibers are within the above respective ranges, the fiber sheet has high integrity and high tensile strength in the width direction. The average length of the bridging fibers is preferably 1 mm or more, and more preferably 5 mm or more. The upper limit of the average length of the bridging fibers is preferably 1000 mm or less, and more preferably 500 mm or less. When the average length of the bridging fibers is within the above range, the fiber sheet has high strength in the width direction and excellent handleability.

The mass per unit area of the fiber sheet is preferably 10 to 500 g/m², more preferably 20 to 400 g/m², and further preferably 30 to 300 g/m². When the mass of the fiber sheet is within the above range, the fiber sheet is easy to handle during converging and pultrusion.

The fiber sheet may also contain an auxiliary yarn arranged in a direction different from the direction of the unidirectional continuous fibers. The auxiliary yarn serves to maintain a fixed orientation of the fiber sheet. Examples of the auxiliary yarn include glass fibers, aramid fibers, polyester fibers, nylon fibers, and vinylon fibers.

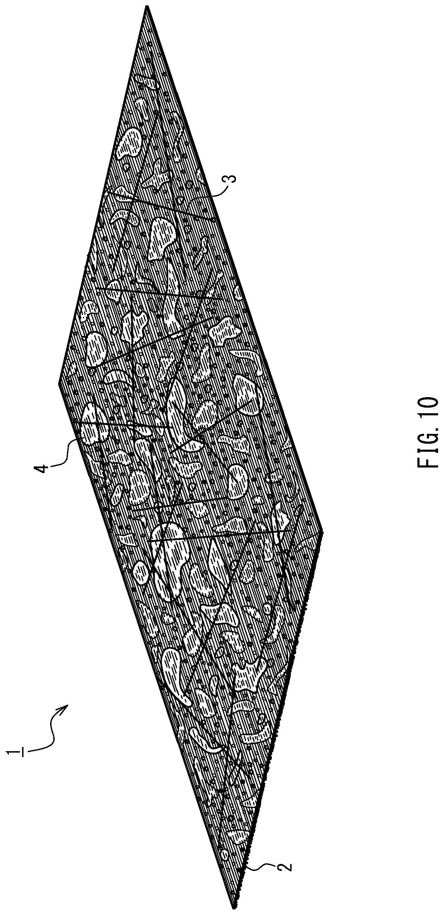

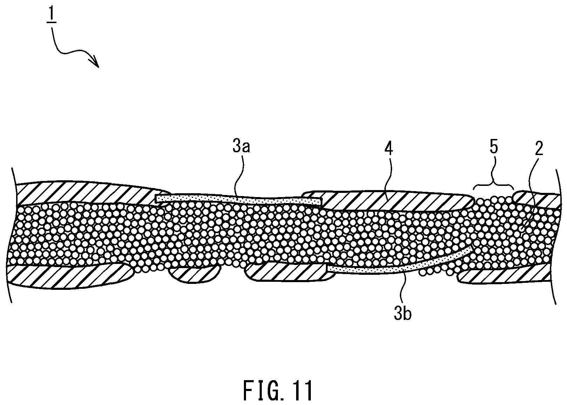

Hereinafter, an example of the fiber sheet (semi-preg sheet), which is the material of the pultruded product, will be described in more detail with reference to FIGS. 10 to 12. FIG. 10 is a schematic perspective view of a carbon fiber sheet 1 as an example of the semi-preg sheet. FIG. 11 is a schematic cross-sectional view of the carbon fiber sheet 1 in FIG. 10. In FIG. 10, bridging fibers 3 are arranged in various directions on the surface of spread unidirectional carbon fibers 2. A thermoplastic resin 4 is melt-solidified and attached to the surface of the unidirectional carbon fibers 2 and its vicinity. The unidirectional carbon fiber sheet is not impregnated with or is partially impregnated with the resin 4. As illustrated in FIG. 11, bridging fibers 3a, 3b are present on the surface of the unidirectional carbon fibers 2. The whole of the bridging fiber 3a is located on the surface of the unidirectional carbon fibers 2. On the other hand, a portion of the bridging fiber 3b is located on the surface of the unidirectional carbon fibers 2 and the other portion of the bridging fiber 3b enters and crosses the unidirectional carbon fibers 2. The term "cross" as used herein includes entanglement. For example, all or part of the bridging fibers 3 are present inside the unidirectional continuous fibers and three-dimensionally cross the unidirectional continuous fibers. The resin 4 allows the bridging fibers 3 to adhere to the surface of the unidirectional carbon fibers 2. The carbon fiber sheet 1 has portions to which the resin 4 is attached and portions 5 to which no resin is attached. The portions 5 to which no resin is attached provide passages through which air inside the carbon fiber sheet 1 escapes when the fiber sheet is heated and pultruded, and facilitate the impregnation of the resin on the surface into the entire fiber sheet. Thus, the resin 4 serves as a matrix resin of the pultruded product.

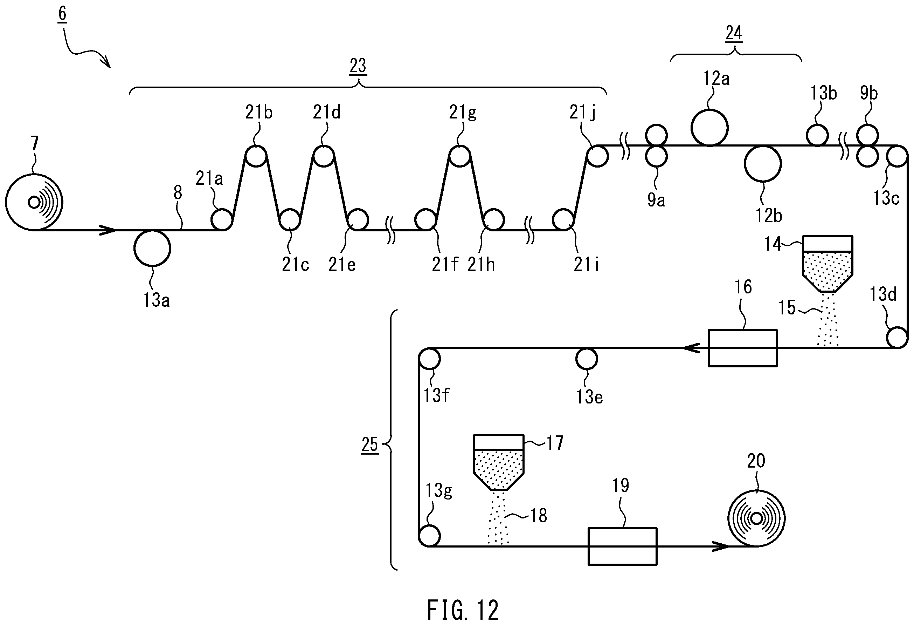

FIG. 12 is a schematic process diagram illustrating a method for producing the semi-preg sheet. Carbon fiber filament groups (tows) 8 are drawn from a number of feed bobbins 7 and pass through spreader rollers 21a to 21j so that the tows are spread (i.e., a roller spreading step 23). Air spreading may be used instead of roller spreading. The spreader rollers may be fixed or rotated or may vibrate in the width direction. After the spreading step, the spread tows are nipped between nip rollers 9a and nip rollers 9b while they are passing through bridge rollers 12a and 12b, located between the nip roller pairs 9a and 9b, and being held under a tension of e.g., 2.5 N to 30 N per 15,000 filaments (corresponding to a carbon fiber filament group fed from a single feed bobbin), thereby producing bridging fibers (i.e., a bridging fiber producing step 24). The bridge rollers may be rotated or may vibrate in the width direction. The bridge rollers may be, e.g., a plurality of rollers with satin, uneven, or mirror-finished surfaces, and produce the bridging fibers by subjecting the carbon fiber filament groups to bending, fixing, rotating, vibrating, or a combination thereof. Reference numerals 13a to 13g denote guide rollers. As described above, a predetermined tension is applied to the spread carbon fiber filament groups to produce the bridging fibers from the carbon fiber filament groups. Therefore, some bridging fibers are also present inside the fiber sheet and extend in a direction across the fiber sheet Consequently, such bridging fibers three-dimensionally cross the unidirectional continuous fibers.

Thereafter, a dry powder resin 15 is sprinkled on the surface of a spread fiber sheet from a powder supply hopper 14. This sheet in an unpressurized state is fed into a heating device 16 and heated to melt the dry powder resin 15, and then is cooled through the guide rollers 13e to 13g. Subsequently, a dry powder resin 18 is also sprinkled on the back surface of the spread fiber sheet from a powder supply hopper 17. This sheet in an unpressurized state is fed into a heating device 19 and heated to melt the dry powder resin 18, and then is cooled and wound onto a take-up roller 20 (i.e., a powder resin applying step 25). The dry powder resins 15 and 18 are each, e.g., a polyphenylene sulfide resin (melting point: 290°C). The temperature in each of the heating devices 16 and 19 is, e.g., 5 to 60°C above the melting point or the resin flow temperature of the resin, and the residence time is, e.g., 4 seconds for each heating device. Under these conditions, the carbon fiber sheet has a high strength in the width direction and can be handled as a sheet without causing the constituent carbon fibers to fall apart.

The powder resin may be applied by, e.g., powder coating, electrostatic coating, spraying, or fluidized-bed coating. The powder coating is preferred, in which a powder resin is dropped on the surface of the spread fiber sheet. For example, a dry powder resin may be sprinkled over the spread fiber sheet.

Instead of producing the bridging fibers from the carbon fiber filament groups by applying a predetermined tension to the spread carbon fiber filament groups, as described above, the bridging fibers may be dropped on the spread fiber sheet The bridging fibers may be present on one side or both sides of the spread fiber sheet. When the fiber sheet (semi-preg sheet) does not contain the bridging fibers, the bridging fiber producing step 24 can be omitted from the production method in FIG. 12.

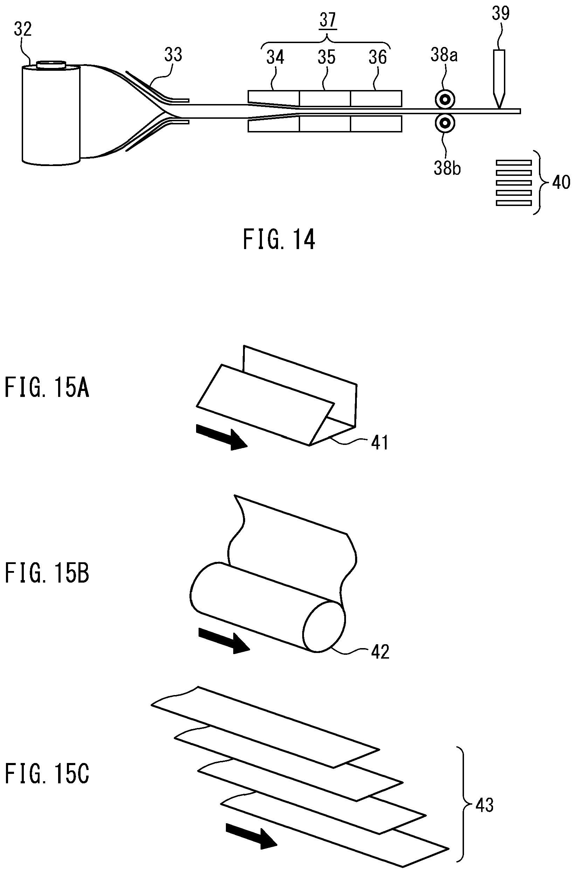

Next, an example of a method for producing a pultruded product that is used to form the rib-reinforced molded product of the present invention will be described with reference to FIG. 14. In FIG. 14, a pultrusion die 37 includes a heating section 34, a molding section 35, and a cooling section 36 in this order along the traveling direction of a fiber sheet. A fiber sheet 32 is converged by passing through a guide 33 and fed into the heating section 34 of the pultrusion die 37. In the heating section 34, the fiber sheet 32 is heated to a temperature equal to or higher than the melting point or the resin flow temperature of the thermoplastic resin present on at least the surface of the fiber sheet 32. The resin flow temperature refers to a temperature at which the resin begins to flow. In the heating section 34, the fiber sheet is compressed while being pulled in the traveling direction and molded into a shape of the inner cavity of the heating section 34. Then, the fiber sheet is drawn in the molding section 35, shaped into a shape of the inner cavity of the molding section 35, and stabilized in that shape in the molding section 35. The die temperature in the molding section 35 is preferably equal to that in the heating section 34. Then, the fiber sheet is oooled in the cooling section 36 to fix its shape. The die temperature in the molding section 35 is, e.g., equal to or higher than the melting point or the resin flow temperature of the thermoplastic resin. Water cooling is an efficient cooling system in the cooling section 36. The resulting molded product is pulled out of the pultrusion die 37 by pulling rollers 38a and 38b, and then is either wound up if the molded product is thin or cut as desired with a blade 39 to a predetermined length, thus providing a fiber-reinforœd resin pultruded product 40.

In one aspect, the method for producing the pultruded product that is used to form the rib-reinforced molded product of the present invention uses, as a material of the pultruded product, a fiber sheet (semi-preg sheet) in which a thermoplastic powder resin that will be a matrix resin of the pultruded product is fused to the surface of the unidirectional continuous fibers and its vicinity. The production method includes the following steps:
(1) a feeding step of converging the fiber sheet and feeding the converged fiber sheet into a heating section of a pultrusion die;
(2) a heating and compressing step of compressing the fiber sheet by a pulling force while heating the fiber sheet to a temperature equal to or higher than the melting point or the resin flow temperature of the thermoplastic resin in the heating section of the pultrusion die;
(3) a molding step of molding the compressed fiber sheet in a molding section of the pultrusion die;
(4) a cooling step of cooling the molded product in a cooling section of the pultrusion die to provide a pultruded product; and
(5) a pulling step of pulling the pultruded product out of the pultrusion die.

In the feeding step, one or more than one fiber sheet is used. It is preferable that the fiber sheet is fed into the heating section in at least one converged state selected from the group consisting of a folded state, a wound state, and a state in which strip-shaped sheets are stacked. Thus, the planar fiber sheet can be brought closer to a three-dimensional molded product having a rod shape or the like, and the fiber sheet is irregularly folded within the pultruded product. The term "converge" as used herein means that the fiber sheet will be gathered or bunched and made ready for molding. This includes, e.g., folding of the fiber sheet, winding of the fiber sheet, and stacking of the strip-shaped sheets, as described above.

FIG. 15A illustrates a fiber sheet 41 in a folded state, FIG. 15B illustrates a fiber sheet 42 in a wound state, and FIG. 15C illustrates a fiber sheet 43 that is a stack of strip-shaped fiber sheets. The fiber sheet 42 may be wound obliquely. When the stack of strip-shaped fiber sheets is fed, the strip-shaped fiber sheets may be staggered in the length direction, as illustrated in FIG. 15C, so that an endless pultruded product with no length limitation can be obtained. The guide 33 (see FIG. 14) etc. may be used as a converging means of the fiber sheet 32. The fibers may be oriented at any angle when the fiber sheet is converged. A sheet further may be wrapped around the wound fiber sheet The fiber sheet may be wound at any angle. A plurality of fiber sheets may be stacked and the angle between the layers can be set as desired, such as 0°, 45°, or 90°. Usually, each fiber sheet is laid at 0° in the longitudinal direction (one direction). The angle of "0°" means that the longitudinal direction of the unidirectional continuous fibers of the fiber sheet is the same as the pulling direction in pultrusion (i.e., the longitudinal direction of the molded product). The amount of insertion of the semi-preg sheet in the pultrusion die can be changed according to the target diameter and the mass per unit length of the pultruded product.

In the heating and compressing step, the heating temperature of the fiber sheet (the die temperature in the heating section 34) is, e.g., equal to or higher than the resin melting temperature, and the pulling speed is preferably 10 mm/min to 100 m/min. The melting of the thermoplastic resin, the impregnation of the thermoplastic resin into the spaces between the fibers, and the molding of the fiber sheet can be controlled by the two conditions of the temperature and the pulling speed. The internal space of the heating section 34 may be tapered off, with its diameter decreasing in the traveling direction of the fiber sheet, or may be in the form of a trumpet Specifically, an inlet diameter (D1) of the heating section 34 is preferably larger than the target diameter of the pultruded product, and an outlet diameter (D2) of the heating section and a diameter (D3) of the molding section are preferably the same as the target diameter.

The outlet diameter (D2) of the heating section 34 and the diameter (D3) of the molding section 35 are each, e.g., 1 to 15 mm. The ratio (D1/D2) of the inlet diameter (D1) of the heating section 34 to the outlet diameter (D2) of the heating section 34 is preferably 1.5 times or more, more preferably 2 times or more, and further preferably 2.5 times or more. There is no upper limit to D1/D2, but in practice D1/D2 is preferably 10 times or less, and more preferably 8 times or less. Depending on this ratio, the fiber sheet 32, which is the material of the pultruded product, is compressed by the pulling force in the heating section 34. In other words, the fiber sheet 32 is compressed while being pulled in the traveling direction. The compression results in a high-density molded product with few voids inside. A diameter (D4) of the die in the cooling section 36 is preferably the same as the outlet diameter (D2) of the die in the heating section 34 and the diameter (D3) of the molding section 35.

It is preferable that a series of steps from the feeding step to the pulling step is continuously performed. The continuous steps can improve the production efficiency and reduce the production cost.

A long-pultruded product obtained after the cooling step may be continuously wound up if the pultruded product is thin enough to be wound, or may be cut to a predetermined length.

The production method of the pultruded product in an aspect of the present invention is characterized in that the semi-preg sheet is directly molded. Unlike a prepreg sheet, the fiber sheet (semi-preg sheet) used is flexible and has excellent formability, can be inserted directly into the heating section 34, and does not require preheating. On the other hand, the prepreg is hard and cannot be folded as it is. Moreover, the choice of the thermoplastic resin is limited in the conventional method for producing a wire rod, in which fiber bundles are bound with a binding material and then dipped into a thermoplastic resin solution to form a wire rod. In contrast, the above production method of the pultruded product uses the fiber sheet to which a resin is attached, and thus can employ almost any resin that is a thermoplastic resin used for general molding. In an aspect of the fiber sheet to be molded into the pultruded product, a thermoplastic resin powder is dropped on the fiber surface of the unidirectional continuous fibers (spread fiber sheet) and then melt-solidified. Therefore, the resin can be heated, melted, and subsequently cooled with efficiency while the pultruded product is being formed, resulting in good moldability and a high molding speed for the pultruded product.

### [Fiber-reinforced resin sheet]

Next, a fiber-reinforced resin sheet used to form the rib-reinforced molded product of the present invention will be described in more detail. The fiber-reinforced resin sheet is the material of the molded main body. The fiber-reinforced resin sheet is preferably a semi-preg sheet that contains fibers and a thermoplastic resin, that is highly flexible, and that is unimpregnated with resin and/or semi-impregnated with resin. In terms of improving the strength and rigidity of the rib-reinforced molded product, the fiber-reinforced resin sheet is more preferably a semi-preg sheet in which a thermoplastic powder resin is fused to the fiber surface of unidirectional continuous fibers (spread fiber sheet) obtained by spreading a group of continuous fibers and aligning the continuous fibers in parallel in one direction. When the rib-reinforced molded product is formed, the thermoplastic powder resin serves as a matrix (base material) resin of the molded main body and joins the molded main body and the reinforcing rib together so that they are integrated. The fiber-reinforced resin sheet may further contain bridging fibers as secondary fibers extending in directions that cross the unidirectional continuous fibers. In this case, the thermoplastic resin preferably integrates the unidirectional continuous fibers with the bridging fibers. The semi-preg sheet, which is to be the molded main body in the process of forming the rib-reinforced molded product, has the same configuration as the semi-preg sheet that has been described as an example of the fiber sheet (which is the material of the pultruded product) with reference to FIGS. 10 and 11, except that the resin constituting the semi-preg sheet and/or the volume fractions of the resin and the fibers are the same or different. The semi-preg sheet can be produced by the method described with reference to FIG. 12. When the fiber-reinforced resin sheet does not contain the bridging fibers, the bridging fiber producing step 24 can be omitted from the production method in FIG. 12. The fiber-reinforced resin sheet can be produced by the method for producing a resin-integrated fiber sheet as disclosed in WO 2021/095626.

In terms of the formability and moldability of the rib-reinforced molded product, the thermoplastic resin contained in the fiber-reinforced resin sheet preferably has a lower softening point than the thermoplastic resin constituting the pultruded product.

In the fiber-reinforced resin sheet, the volume fraction (Vf) of the fibers is preferably 20 to 65% by volume and the volume fraction of the thermoplastic resin is preferably 35 to 80% by volume; and the volume fraction (Vf) of the fibers is more preferably 25 to 60% by volume and the volume fraction of the thermoplastic resin is more preferably 40 to 75% by volume. This allows the resin component of the fiber-reinforced resin sheet to be used as the matrix resin component of the molded main body, integrates the reinforcing rib with the molded main body, and eliminates the necessity of adding new resin during the production of the rib-reinforced molded product.

When the fiber-reinforced resin sheet contains the bridging fibers, the mass fraction of the unidirectional continuous fibers is preferably 75 to 99% by mass, more preferably 80 to 97% by mass, and further preferably 85 to 95% by mass and the mass fraction of the bridging fibers is preferably 1 to 25% by mass, more preferably 3 to 20% by mass, and further preferably 5 to 15% by mass, provided that the total of the unidirectional continuous fibers and the bridging fibers is 100% by mass. When the mass fractions of these fibers are within the above respective ranges, the fiber-reinforced resin sheet has high integrity and high tensile strength in the width direction. The average length of the bridging fibers is preferably 1 mm or more, and more preferably 5 mm or more. The upper limit of the average length of the bridging fibers is preferably 1000 mm or less, and more preferably 500 mm or less. When the average length of the bridging fibers is within the above range, the fiber-reinforced resin sheet has high strength in the width direction and excellent handleability.

The mass per unit area of the fiber-reinforced resin sheet is preferably 10 to 3000 g/m², more preferably 20 to 2000 g/m², and further preferably 30 to1000 g/m².

The thickness ofone fiber-reinforced resin sheet is preferably 0.01 to 5.0 mm. The fiber reinforced resin sheet having a thickness within this range is suitable for vacuum pressure molding. The number of layers of the fiber-reinforced resin sheets is preferably 2 to 70, and more preferably 2 to 50 in the vacuum pressure molding.

Hereinafter, an example of a rib-reinforced molded product of the present invention and an example of a method for producing the rib-reinforced molded product of the present invention will be described with reference to the drawings.

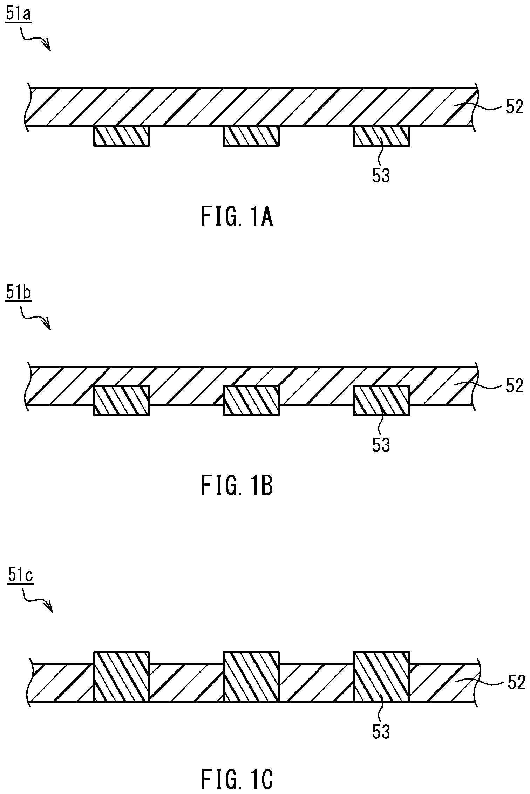

In the following drawings, the same components are denoted by the same reference numerals. FIGS. 1A to 1C are each a schematic cross-sectional view of a rib-reinforced molded product in an aspect of the present invention. FIG. 1A illustrates a rib-reinforced molded product 51a that includes a molded main body 52 and reinforcing ribs 53. The molded main body 52 contains a resin or a resin and strengthening fibers (short fibers). The reinforcing ribs 53 are disposed on one principal surface (i.e., the lower surface) of the molded main body 52. FIG. 1B illustrates a rib-reinforced molded product 51b in which portions of the reinforcing ribs 53 are embedded in the molded main body 52 and the remaining portions of the reinforcing ribs 53 protrude from one principal surface (i.e., the lower surface) of the molded main body 52. FIG. 1C illustrates a rib-reinforced molded product 51c in which portions of the reinforcing ribs 53 are embedded in the molded main body 52 and the remaining portions of the reinforcing ribs 53 protrude from the other principal surface G.e., the upper surface) of the molded main body 52. In each of the rib-reinforced molded products 51a to 51c, the reinforcing ribs 53 are integrated with the molded main body 52. In an aspect of the rib-reinforced molded product of the present invention, two or more of the configurations illustrated in FIGS. 1A to 1C may be used in combination. Moreover, in an aspect of the rib-reinforced molded product of the present invention, the entire reinforcing rib may be embedded in the molded main body 52.

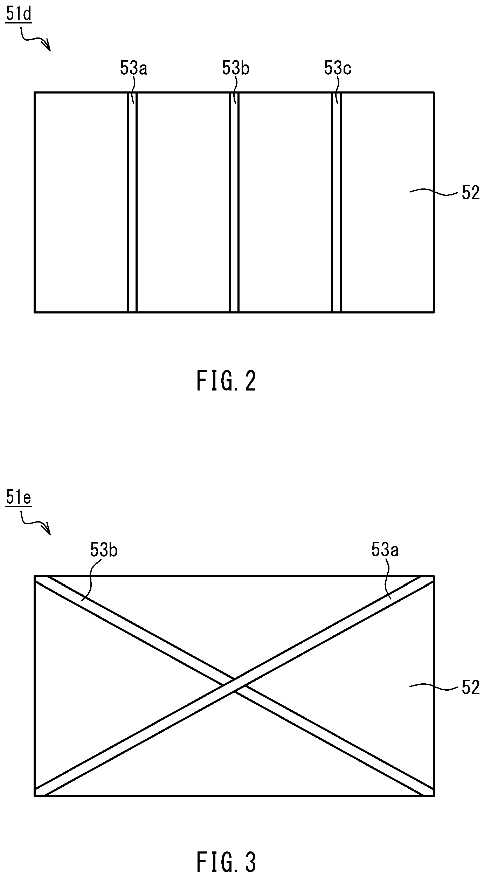

FIG. 2 is a schematic underside view of a rib-reinforced molded product 51d in another aspect of the present invention. The rib-reinforced molded product 51d includes reinforcing ribs 53a to 53c that are integrally molded with the molded main body 52. The reinforcing ribs 53a to 53c are disposed in parallel with each other on the back surface of the molded main body 52.

FIG. 3 is a schematic underside view of a rib-reinforced molded product 51e in another aspect of the present invention. The rib-reinforced molded product 51e includes reinforcing ribs 53a, 53b that are integrally molded with the molded main body 52. The reinforcing ribs 53a, 53b intersect on the back surface of the molded main body 52.

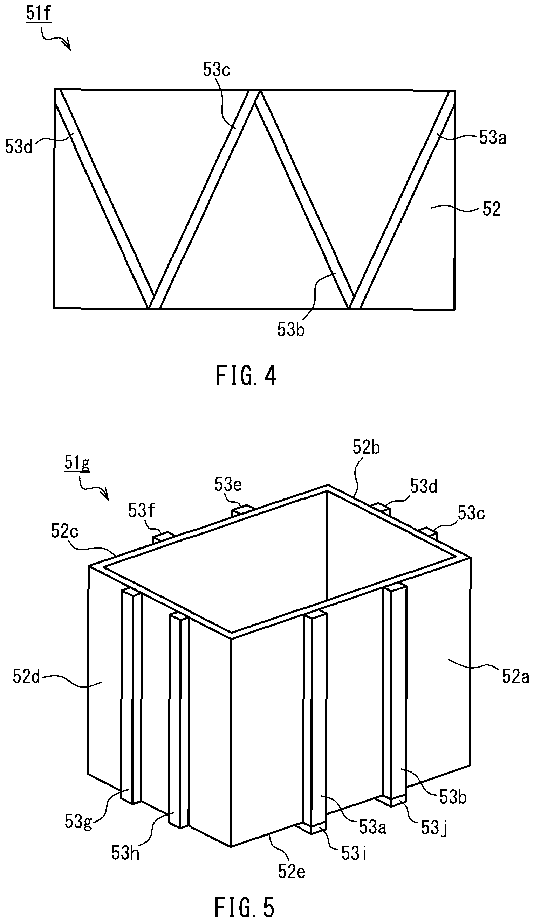

FIG. 4 is a schematic underside view of a rib-reinforced molded product 51fin another aspect of the present invention. The rib-reinforced molded product 51fincludes reinforcing ribs 53a to 53d that are integrally molded with the molded main body 52. The reinforcing ribs 53a to 53d are disposed in a W shape on the back surface of the molded main body 52.

FIG. 5 is a schematic underside view of a rib-reinforced molded product 51g (housing) in another aspect of the present invention. The rib-reinforced molded product 51g is a housing and includes a box-like molded main body with a bottom 52e and sides 52a to 52d. The rib-reinforced molded product 51g includes reinforcing ribs 53a to 53j that are integrally molded with the molded main body. Two reinforcing ribs are disposed in parallel with each other on each of the outer surfaces of the bottom 52e and the sides 52a to 52d.

### [Vacuum pressure molding]

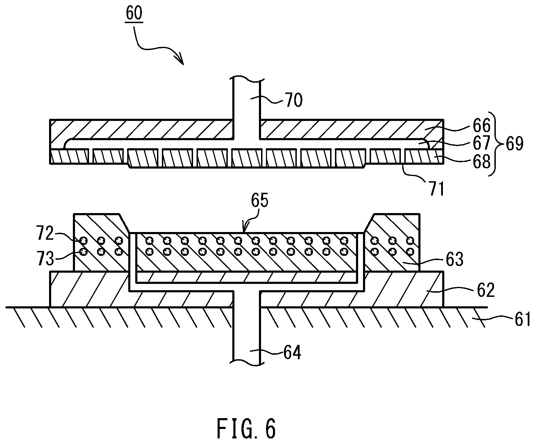

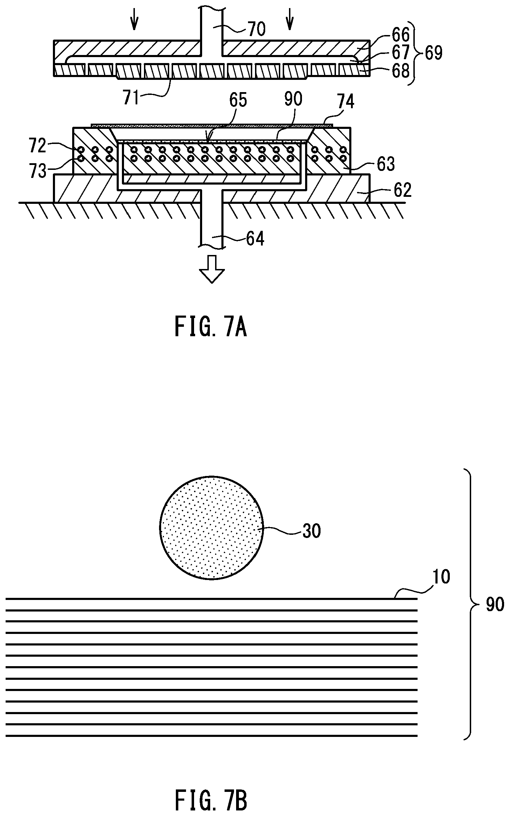

Next, an example of a method for producing the rib-reinforced molded product of the present invention will be described with reference to FIGS. 6 to 8. FIG. 6 is a schematic cross-sectional view of a vacuum pressure molding machine used in a method for producing a rib-reinforced molded product in an aspect of the present invention. FIGS. 7 to 8 are schematic process diagrams illustrating each step in the method for producing a rib-reinforced molded product in an aspect of the present invention.

As illustrated in FIG. 6, a vacuum pressure molding machine 60 includes a lower die 63 having a vacuum line 64 and an upper die 69 having a pressure line 70. The lower die 63 is fixed on a base 61 and a die base 62, and the vacuum line 64 extends to a molding surface 65. A vacuum pump (not shown) is connected to the vacuum line 64. The upper die 69 has an upper die main body 66 including the pressure line 70. The upper die 69 can supply compressed air downward (toward the lower die 63) through an air groove 67 and air holes 71 in a faceplate 68. A compressor (not shown) is connected to the pressure line 70. The lower die 63 is heated with a heater 72 (using, e.g., electromagnetic induction heating, resistance wire heating, infrared heating, or wire heating) and cooled with a water-cooled tube 73, and thus can be controlled at a predetermined temperature.

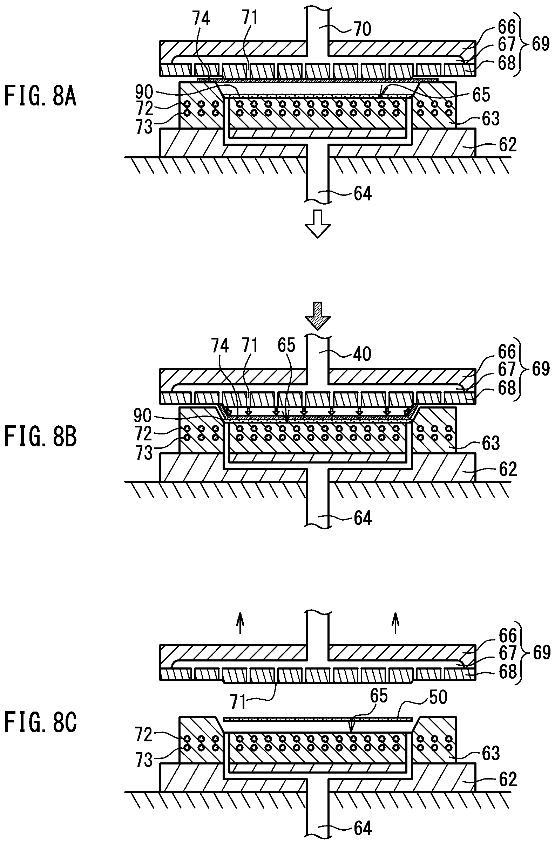

FIG. 7 illustrate a preparation step. FIG. 8A illustrates a heating and temperature rise step, FIG. 8B illustrates a heating and vacuum pressure molding step, and FIG. 8C illustrates a cooling and demolding step. First, as illustrated in FIG. 7A, a stack 90 (see FIG. 7B) in which a plurality of semi-preg sheets 10 are arranged in layers and a reinforcing rib 30 is disposed on top of them is placed on the molding surface 65 of the lower die 63. In this case, the stack 90 is placed with the semi-preg sheets 10 facing the molding surface 65. Then, the lower die 63 is covered with a bagging film 74 so that a closed space is formed under the bagging film 74, in which a vacuum atmosphere can be created. Moreover, the upper die 69 is placed on the bagging film 74.

Next, as illustrated in FIG. 8A, the air inside the lower die 63 (the closed space) is sucked from the vacuum line 64 to reduce the pressure in the closed space, and the stack 90 is drawn down to the lower die 63 and brought into close contact with the lower die 63. The temperature of the lower die 63 is increased by the heater 72. The temperature rise of the lower die 63 may begin simultaneously with the start of the depressurization or may begin either before or after the start of the depressurization. Then, as illustrated in FIG. 8B, under the reduced pressure, the stack 90 is heated to a temperature equal to or higher than the softening point of a thermoplastic resin constituting the semi-preg sheets 10 to soften the thermoplastic resin, and at the same time the stack 90 is pressurized with compressed air from above the bagging film 74 and pressed against the lower die. Finally, as illustrated in FIG. 8C, the resulting molded product is oooled while the pressure conditions in FIG. 8B are maintained. After cooling, the pressure applied to the closed space is released, and a rib-reinforced molded product 50 (vacuum pressure molded product) is demolded.

The degree of depressurization (i.e., the degree of vacuum) in the closed space due to exhaust from the vacuum line 64 of the lower die 63 is preferably 0 to 0.1 MPa, and the air pressure of the compressed air supplied from the pressure line 70 of the upper die 69 is preferably 0.1 to 2.0 MPa. Examples of the bagging film include fluororesin films such as a polytetrafluoroethylene film, and heat resistant films such as a polyimide resin film and a silicone rubber sheet.

Advantages of the production method of the rib-reinforced molded product of this aspect are as follows.
(1) The semi-preg sheet containing unidirectional continuous fibers (spread fiber sheet) and a thermoplastic resin is used as a material of the molded main body 10. This can reduce the thickness of the molded main body 10 and provide a rib-reinforced molded product with high strength and excellent formability. In addition, the use of the semi-preg sheet enables direct molding. Therefore, the stack 90 can be shaped even without preheating (to soften the molding material before being placed in a molding die), and this shaping can be performed almost at the same time as the filling (impregnation) of the entire spread fiber sheet with the resin
(2) Due to the direct molding, the thermal history of the resin can be reduced, preventing degradation of the resin
(3) Since the vacuum pressure molding uses the bagging film, the stack can be formed into not only a flat plate shape, but also various three-dimensional shapes.

### [Injection molding]

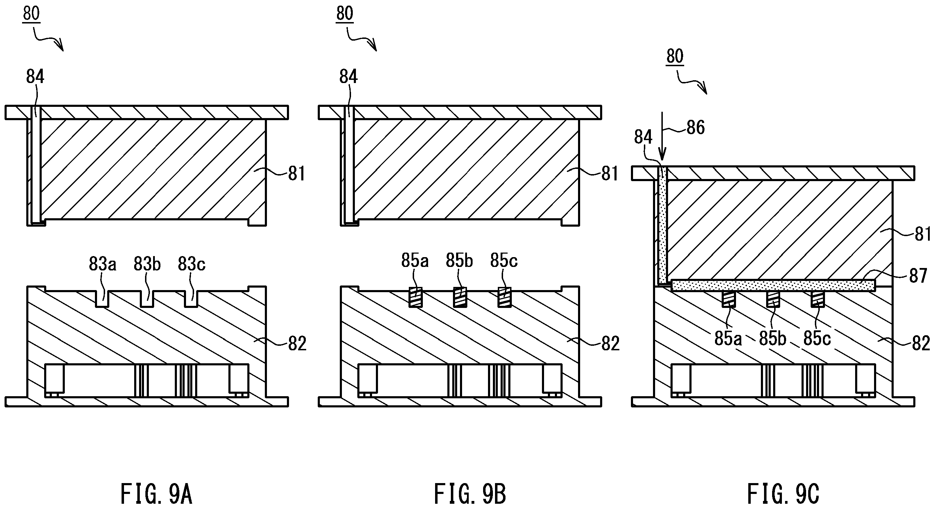

Next, another example of a method for producing the rib-reinforced molded product of the present invention will be described with reference to FIG. 9.

FIG. 9A illustrates an in-mold (injection) molding machine 80 used in a method for producing a rib-reinforced molded product of this aspect. The molding machine 80 includes an upper die 81 and a lower die 82. In FIG. 9A, the upper die 81 and the lower die 82 are illustrated as being located apart from each other. A gap is formed when these dies are aligned and laid one on top of the other, and the gap serves as a cavity. Grooves 83a to 83c for positioning reinforcing ribs are provided in the surface of the lower die 82 that defines the cavity. Reference numeral 84 denotes an injection port for a molten resin. As illustrated in FIG. 9B, reinforcing ribs 85a to 85c are disposed in the grooves 83a to 83c, respectively. Next, as illustrated in FIG. 9C, the upper die and the lower die are aligned and laid one on top of the other, and subsequently a molten resin 86 is injected through the injection port 84. The molten resin is molded into a molded main body 87 and is integrated with the reinforcing ribs 85a to 85c in the cavity between the upper die 81 and the lower die 82.

### [Embodiment 2]

In an aspect of a rib-reinforced molded product of the present invention, the molded main body is a laminated base material composed of a plurality of base material layers, each of which contains a resin, and the reinforcing rib is a rib member that is disposed inside the laminated base material. The rib-reinforced molded product has a ridge on one principal surface that corresponds to the contour of the rib member disposed inside the laminated base material. In other words, an aspect of the rib-reinforced molded product of the present invention includes a laminated base material composed of a plurality of base material layers, and a rib member that contains reinforcing fibers and a thermoplastic resin and is disposed inside the laminated base material. The reinforcing fibers include continuous fibers that are arranged in the longitudinal direction of the reinforcing rib. A ridge that corresponds to the contour of the rib member is formed on one principal surface of the rib-reinforced molded product. Since the rib member contains the reinforcing fibers, the strength and rigidity of the ridge are increased, which in turn increases the strength and rigidity of the rib-reinforced molded product. Because of the increased strength and rigidity of the ridge, it is possible to provide a rib-reinforced molded product with high strength and high rigidity even if the laminated base material is thin.

In the rib-reinforced molded product of this aspect, the rib member is preferably a fiber reinforced resin pultruded product that contains reinforcing fibers and a thermoplastic resin. The pultruded product may be the same as that described in Embodiment 1. Specifically, e.g., the fiber sheet used to form the pultruded product, the reinforcing fibers and the thermoplastic resin constituting the fiber sheet, the shape of the pultruded product, and the production method of the pultruded product are the same as those described in Embodiment 1. The thermoplastic resin contained in the fiber sheet preferably has a higher softening point than the resin constituting the base material layers.

A base material sheet, which is the material of the base material layer constituting the laminated base material, is not particularly limited and may be, e.g., a resin sheet, a fiber-reinforced resin sheet containing strengthening fibers, a metal sheet, or a cellulose-based sheet. The base material sheet is preferably at least one resin containing sheet selected from the group consisting of a resin sheet and a fiber-reinforced resin sheet containing strengthening fibers. The resin containing sheet is not particularly limited as long as it can be integrally molded with the rib member, but is more preferably a fiber-reinforced resin sheet in terms of forming a high-strength rib-reinforced molded product. The resin contained in the base material layer and the resin containing sheet may be either a thermosetting resin or a thermoplastic resin, but is preferably a thermoplastic resin. Examples of the thermoplastic resin include, but are not limited to, polyamide-based resin, polycarbonate-based resin, polypropylene-based resin, polyester-based resin, polyethylene-based resin, acrylic-based resin, phenoxy resin, polystyrene-based resin, polyimide-based resin, and polyetheretherketone-based resin.

When the resin containing sheet used to form the base material layer is a fiber reinforced resin sheet, the resin-reinforced resin sheet may be the same as the fiber-reinforced resin sheet that is the material of the molded main body described in Embodiment 1.

The rib-reinforced molded product of this aspect is preferably a hot press molded product, a vacuum molded product, a pressure molded product, or a vacuum pressure molded product. The rib-reinforced molded product of this aspect can be produced by integrally molding the rib member with a plurality of base material sheets using any of the molding methods such as hot press molding, vacuum molding, pressure molding, and vacuum pressure molding. The molding method is preferably any one of vacuum molding, pressure molding, and vacuum pressure molding, and particularly preferably vacuum pressure molding. The vacuum pressure molding can shape the constituent materials into various forms while integrating the constituent materials, and therefore is suitable as a molding method of a thin molded product.

The method for producing the rib-reinforced molded product of the present invention preferably includes: heating and softening a stack in which a plurality of resin containing sheets are arranged in layers and a rib member is disposed between any two adjacent layers of the resin containing sheets, vacuum molding the stack in a lower die having a vacuum line; and pressure molding the stack with compressed air supplied from an upper die to the lower die. Specifically, the rib-reinforced molded product is preferably produced by a method including the following steps (a) to (d) using a vacuum pressure molding machine that includes the lower die, a bagging film, and the upper die:
(a) a step of placing the stack on the lower die, subsequently covering the lower die with the bagging film, and forming a closed space between the bagging film and the lower die, in which a vacuum atmosphere can be created;
(b) a step of reducing the pressure in the closed space from the vacuum line, bringing the stack into close contact with the lower die, and increasing the temperature of the lower die;
(c) a step (vacuum pressure molding step) of heating the stack to a temperature equal to or higher than the softening point of the thermoplastic resin contained in the resin containing sheets and pressing the stack against the lower die by supplying compressed air from the upper die located above the bagging film to the lower die, while maintaining the pressure conditions in the step (b); and
(d) a step of cooling the resulting molded product while maintaining the pressure conditions in the step (c), and demolding the cooled molded product.

The temperature equal to or higher than the softening point is a temperature at which the resin softens or melts.

In the step (a), the resin containing sheet is preferably a fiber-reinforced resin sheet, and the thickness of one fiber-reinforced resin sheet is preferably 0.01 to 5.0 mm. The fiber-reinforced resin sheet having a thickness within this range is suitable for vacuum pressure molding. The number of layers of the fiber-reinforced resin sheets is preferably 5 to 70, and more preferably 8 to 50 in the vacuum pressure molding.

Hereinafter, an example of a rib-reinforced molded product of this aspect and an example of a method for producing the rib-reinforced molded product will be described with reference to the drawings.

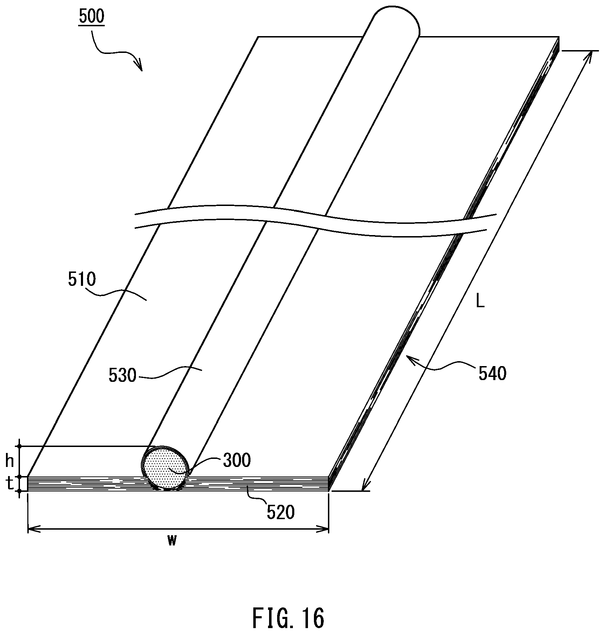

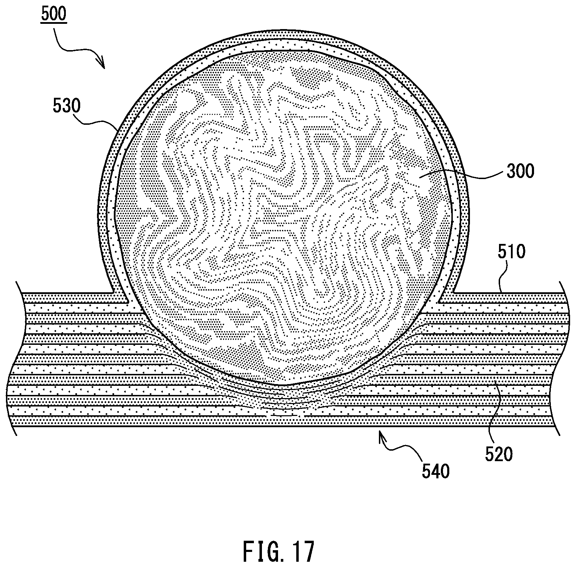

FIG. 16 is a schematic perspective view of a rib-reinforced molded product 500 in an aspect of the present invention. FIG. 17 is a schematic partially enlarged cross-sectional view of the rib-reinforced molded product 500 in FIG. 16. As illustrated in FIGS. 16 and 17, the rib-reinforced molded product 500 is in the form of a plate and has a ridge 530 on one principal surface 510. As can be seen from FIG. 17, the rib-reinforced molded product 500 includes a laminated base material 540 composed of a plurality of base material layers 520, and a rib member 300 that serves as a reinforcing rib and is disposed inside the laminated base material 540. For example, the rib member 300 is disposed between the second and third base material layers 520 from the principal surface 510, so that the rib member 300 and the base material layers 520 are stacked and integrated.

Of the base material layers 520, in particular, the base material layer 520 that is arranged closer to the principal surface 510 than the rib member 300 covers the rib member 300 so as to conform to the outer surface of the rib member 300. Thus, the ridge 530 that corresponds to the contour of the rib member 300 is formed as a rib on the principal surface 51. The rib member 300 is disposed between the base material layers 520 and is not exposed on the surface of the rib-reinforced molded product 500, but is embedded in the rib-reinforced molded product 500.

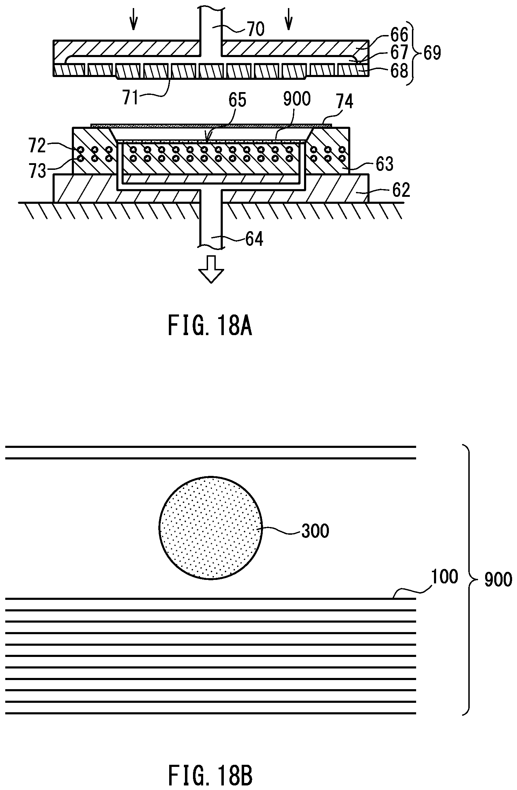

Both the base material layers 520 and the rib member 300 contain a thermoplastic resin. Therefore, in the production process of the rib-reinforced molded product 500, resin containing sheets 100 (see FIG. 18B), which will be molded into the base material layers 520, can be laminated and integrated with each other, and the rib member 300 can be integrally molded with the resin containing sheets 100. The ridge 530 is formed according to the contour of the rib member 300 containing reinforcing fibers, and thus has high strength and high rigidity. Consequently, the presence of the rib member 300 in the rib-reinforced molded product 500 improves the strength and rigidity of the rib-reinforced molded product 500.

The number of layers of the base material layers 520 is not particularly limited and is preferably 5 to 70, and more preferably 8 to 50. The position of the rib member 300 in the stacked base material layers 520 is not particularly limited. When the rib member 300 is a pultruded product, the rib member 300 is preferably disposed two or more layers below one principal surface of the rib-reinforced molded product 500 on which the ridge 530 is formed, because the pultrusion mark or fibers on the surface of the pultruded product and the constituent fibers of the fiber-reinforced resin sheets that are to be formed into the base material layers 520 can be covered with the resin, thus improving the smoothness of the principal surface of the rib-reinforced molded product 500.

When a base material layer 52 is made of a fiber-reinforced resin sheet containing unidirectional continuous fibers (spread fiber sheet), a plurality of fiber-reinforced resin sheets may be stacked by changing the direction of the unidirectional continuous fibers. For example, the direction of the unidirectional continuous fibers may be changed to 0°/ 45°/ 90°/ 135°/ 180°/..., 0°/ 90°/ 180°/..., etc. This can provide a molded product with the required mechanical properties.

The rib-reinforced molded product 500 includes one rib member 300, but the number of rib members 300 is not particularly limited and may be appropriately determined depending on, e.g., the size, shape, use, and required strength of the rib-reinforced molded product 500. For example, the rib-reinforced molded product 500 may include at least two rib members, and the rib members may be arranged in parallel with each other, or one of the rib members may be angled with respect to the other. Alternatively, the rib-reinforced molded product 500 may include rib members that are diagonal to each other.

Next, as an example of a method for producing the rib-reinforced molded product of the present invention, a method for producing the rib-reinforced molded product 500 in FIGS. 16 and 17 will be described. The production method of the rib-reinforced molded product of this aspect also uses the vacuum pressure molding machine 60 described in Embodiment 1, and the explanation of the vacuum pressure molding machine 60 will not be repeated. The production method of the rib-reinforced molded product 500 of this aspect is the same as the production method of the rib-reinforced molded product described with reference to FIGS. 7 and 8 in Embodiment 1, except that the stack 900 in FIG. 18B is used instead of the stack 90 in FIG. 7B.

First, as illustrated in FIG. 18A, a stack 900 (see FIG. 18B) in which a plurality of resin containing sheets 100 are arranged in layers and a rib member 300 is disposed between any two adjacent layers of the resin containing sheets 100 is placed on the molding surface 65 of the lower die 63. In this case, the stack 900 is placed on the molding surface 65 with the rib member 300 facing away from the molding surface 65. Then, the lower die 63 is covered with the bagging film 74 so that a closed space is formed under the bagging film 74, in which a vacuum atmosphere can be created. Moreover, the upper die 69 is placed on the bagging film 74.

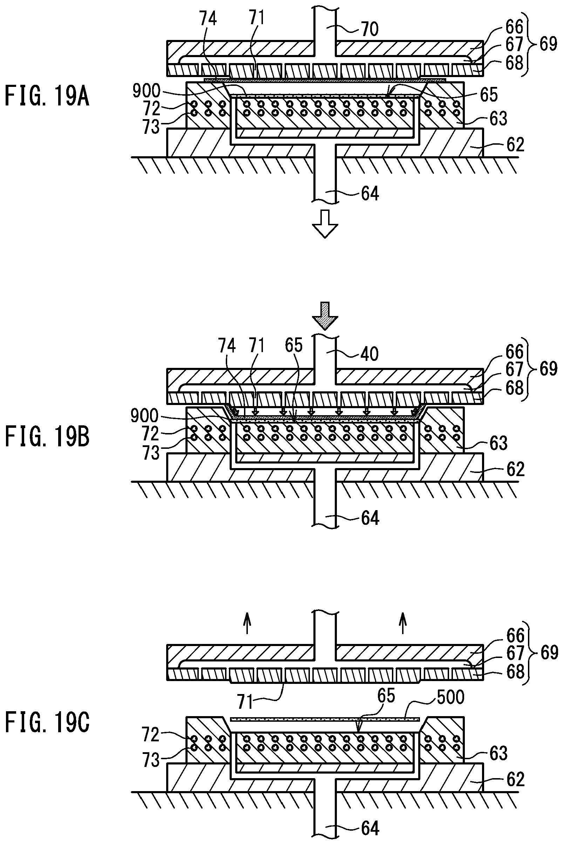

Next, as illustrated in FIG. 19A, the air inside the lower die 63 (the closed space) is sucked from the vacuum line 64 to reduce the pressure in the closed space, and the stack 900 is drawn down to the lower die 63 and brought into close contact with the lower die 63. The temperature of the lower die 63 is increased by the heater 72. The temperature rise of the lower die 63 may begin simultaneously with the start of the depressurization or may begin either before or after the start of the depressurization. Then, as illustrated in FIG. 19B, under the reduced pressure, the stack 900 is heated to a temperature equal to or higher than the softening point of a thermoplastic resin constituting the resin containing sheets 100 to soften the thermoplastic resin, and at the same time the stack 900 is pressurized with compressed air from above the bagging film 74 and pressed against the lower die. Finally, as illustrated in FIG. 19C, the resulting molded product is cooled while the pressure conditions in FIG. 19B are maintained. After cooling, the pressure applied to the closed space is released, and a rib-reinforced molded product 500 (vacuum pressure molded product 500) is demolded.

The preferred degree of depressurization (i.e., the degree of vacuum) in the closed space due to exhaust from the vacuum line 64 of the lower die 63 is the same as that described in Embodiment 1. The preferred air pressure of the compressed air supplied from the pressure line 70 of the upper die 69 is the same as that described in Embodiment 1. Moreover, the bagging film 74 used can be the same as that used in Embodiment 1.

Advantages of the production method of the rib-reinforced molded product in an aspect of the present invention are as follows.
(1) The rib member that contains reinforcing fibers and has high strength and high rigidity is embedded in the molded product. This can provide a rib-reinforced molded product with high strength and high rigidity even if the laminated base material is thin.
(2) In particular, the use of the fiber-reinforced resin sheet (semi-preg) containing continuous fibers as the resin containing sheet 100 can provide a rib-reinforced molded product that is thin, but still has high strength and excellent formability. In addition, the use of the fiber reinforced resin sheet enables direct molding. Therefore, the stack 900 can be shaped even without preheating (to soften the molding material before being placed in a molding die), and this shaping can be performed almost at the same time as the filling (impregnation) of the entire fiber-reinforced resin sheet with the resin. Moreover, due to the direct molding, the thermal history of the resin can be reduced, preventing degradation of the resin.
(3) Since the vacuum pressure molding uses the bagging film, the stack can be formed into not only a flat plate shape, but also various three-dimensional shapes.

### Examples

Hereinafter, the present invention will be described in more detail by way of examples. Note that the present invention is not limited to the following examples.

### (Example 1: Vacuum pressure molding)

### 1. Preparation of pultruded product

### (1) Unspread carbon fiber tow

Unspread carbon fiber tows manufactured by Mitsubishi Chemical Corporation (product number: PYROFIL TR 50S15L, shape: regular tow, filament count: 15K (15,000 filaments), single fiber diameter: 7 pm) were used. An epoxy compound was attached to carbon fibers of the unspread carbon fiber tows as a sizing agent

### (2) Means for spreading unspread tow

The unspread carbon fiber tows were spread by the spreading means illustrated in FIG. 12. In the bridging fiber producing step, the tension of the carbon fiber filament groups (tows) was set to 15 N per 15,000 filaments. In this manner, the unspread tows were formed into a spread fiber sheet with a carbon fiber filament count of 15K, a spread width of 500 mm, and a thickness of 0.08 mm. The bridging fibers accounted for 3.3% by mass.

### (3) Semi-preg sheet (fiber sheet)

A PPS resin powder (manufactured by Solvay SA, polyphenylene sulfide resin, melting point: 290°C) was used as a dry powder resin. The dry powder resin had an average particle size of 350 µm. This resin powder was applied at an average of 29.7 g on one side and at an average of 59.4 g on both sides per 1 m² of the carbon fibers (i.e., the spread fiber sheet). The temperature in each of the heating devices 16 and 19 was 380°C, and the residence time was 4 seconds for each heating device. The resulting semi-preg sheet (fiber sheet) had a mass of 139.6 g/m², a fiber volume fraction (Vf) of 50% by volume, and a PPS resin volume fraction of 50% by volume.

### (4) Pultrusion processing

- A pultruded product was formed using a pultrusion apparatus illustrated in FIG. 14.
- The insertion width of the semi-preg sheet (fiber sheet) was set to 20 mm, and the semi-preg sheet was folded as desired and fed into the heating section 34 of the molding die.
- The semi-preg sheet was heated, compressed, and molded in the heating section 34, and then passed through the heated molding section 35, where the semi-preg sheet was shaped and stabilized in that shape.
- The semi-preg sheet thus molded was cooled in the cooling section 36 to fix its shape.
- The resulting molded product was forced through the pulling rollers 38a and 38b, and then wound by a take-up device with a curvature that allows the molded product to be wound up.

The die temperature in the heating section 34 and the molding section 35 was 400°C, the die temperature in the cooling section 36 (water cooling) was 15°C, and the pulling speed was 72 mm/min.

The resulting pultruded product (CFRTP) was in the form of a rod having a substantially circular cross section with a diameter of 2.5 mm.

### 2. Preparation of fiber-reinforced resin sheet

### (1) Unspread carbon fiber tow

Unspread carbon fiber tows manufactured by Mitsubishi Chemical Corporation (product number: PYROFIL TR 50S15L, shape: regular tow, filament count: 15K (15,000 filaments), single fiber diameter: 7 µm) were used. An epoxy compound was attached to carbon fibers of the unspread carbon fiber tows as a sizing agent

### (2) Means for spreading unspread tow

The unspread carbon fiber tows were spread by the spreading means illustrated in FIG. 12. In the bridging fiber producing step, the tension of the carbon fiber filament groups (tows) was set to 15 N per 15,000 filaments. In this manner, the unspread tows were formed into a spread fiber sheet with a carbon fiber filament count of 15K, a spread width of 500 mm, and a thickness of 0.08 mm. The bridging fibers accounted for 3.3% by mass.

### (3) Semi-preg sheet

A PA12 resin powder (manufactured by UBE Corporation, polyamide 12, melting point 176°C) was used as a dry powder resin. The dry powder resin had an average particle size of 340 pm. This resin powder was applied at an average of 22.5 g on one side and at an average of 45.0 g on both sides per 1 m² of the carbon fibers (i.e., the spread fiber sheet). The temperature in each of the heating devices 16 and 19 was 240°C, and the residence time was 4 seconds for each heating device. The resulting semi-preg sheet (fiber-reinforced resin sheet) had a mass of 125 g/m², a fiber volume fraction (Vf) of 50% by volume, and a PA12 resin volume fraction of 50% by volume.

### 3. Production of rib-reinforced molded product

### (1) Stacking conditions

- The number of layers of the semi-preg sheets (fiber-reinforced resin sheets) was 13.
- The continuous fibers constituting the semi-preg sheets were oriented in two directions (where the semi-preg sheets were stacked at right angles: 0°/ 90°/ 0°/ 90°/ 0°/ 90°/ 0°/ 90°/ 0°/ 90°/ 0°/ 90°/ 0°).
- The pultruded product (CFRTP) was disposed on top of 13 layers of the semi-preg sheets.

### (2) Vacuum pressure molding

Using the vacuum pressure molding machine illustrated in FIGS. 6 to 8, a rib-reinforced molded product of Example 1 was produced in the following procedure.
- Step 1: A stack of the semi-preg sheets and the CFRTP in accordance with "(1) Stacking conditions" above was placed on the lower die made of nickel alloy. In this case, the stack was placed in the lower die so that the semi-preg sheets faced the lower die and the CFRTP would face the upper die later. Then, the lower die was covered with the bagging film to form a closed space between the bagging film and the lower die, in which a vacuum atmosphere could be created. The bagging film was a silicone rubber sheet with a thickness of 2 mm.
- Step 2: The pressure in the closed space was reduced from the vacuum line of the lower die until the degree of depressurization reached 0.09 MPa. The temperature of the lower die was increased simultaneously with the start of the depressurization.
- Step 3: After the temperature of the lower die reached 205°C (molding temperature), the stack was pressurized at 0.70 MPa with compressed air from above the bagging film, held under pressure for 3 minutes, and subjected to vacuum pressure molding. The step 3 was performed while the pressure conditions in the step 2 were maintained.
- Step 4: The lower die was oooled to 50°C while the pressure conditions in the step 3 were maintained. Then, the vacuum line and the pressure line were disconnected, and the resulting vacuum pressure molded product was demolded.

One cycle of the steps 1 to 4 took 400 seconds.

The vacuum pressure molded product included the molded main body and the reinforcing rib that were molded in one piece.

The rib-reinforced molded product of Example 1 was substantially in the form of a plate and included one reinforcing rib. The molded main body had a length of 300 mm, a width of 300 mm, and a thickness (wall thickness) of 1 mm. The height of the reinforcing rib from the surface of the molded main body (i.e., the surface from which the reinforcing rib protruded) was 2.5 mm. There was no warp in this vacuum pressure molded product, and the reinforcing rib had high strength and high rigidity, so that the rib-reinforced molded product also had high strength and high rigidity.

### (Example 2: In-mold molding)

### 1. Preparation of pultruded product

A pultruded product was prepared, which was the same as the pultruded product used to form the rib-reinforced molded product of Example 1.

### 2. Production of rib-reinforced molded product

Using the in-mold (injection) molding machine illustrated in FIGS. 9A to 9C, a rib-reinforced molded product of Example 2 was produced.

Specifically, reinforcing ribs were disposed in the grooves provided in the surface of the lower die that defines a cavity. Next, the upper die and the lower die were aligned and laid one on top of the other, and a polypropylene resin (melting point: 160°C) that had been heated to 220°C and melted was injected into the cavity through the injection port. Then, the upper die and the lower die were water-oooled to 30°C, and a rib-reinforced molded product (injection molded product) was demolded. The resulting rib-reinforced molded product included the molded main body and the reinforcing ribs that were molded in one piece. The molded main body had a length of 300 mm, a width of 300 mm, and a thickness (wall thickness) of 1 mm. In the rib-reinforced molded product, portions of the reinforcing ribs were embedded in the molded main body and the remaining portions of the reinforcing ribs protruded outward from one principal surface (i.e., the lower surface) of the molded main body. The height of the reinforcing ribs from the surface of the molded main body (i.e., the surface from which the reinforcing ribs protruded) was 2 mm. There was no warp in this molded product, and the reinforcing ribs had high strength and high rigidity, so that the molded product also had high strength and high rigidity.

### (Example 3: Vacuum pressure molding, rib member embedded type)

### 1. Preparation of pultruded product

A pultruded product was prepared, which was the same as the pultruded product used to form the rib-reinforced molded product of Example 1.

### 2. Preparation of fiber-reinforced resin sheet (base material sheet)

A semi-preg sheet was prepared, which was the same as the semi-preg sheet used to form the molded main body of the rib-reinforced molded product of Example 1.

### 3. Production of rib-reinforced molded product

### (1) Stacking conditions

- The number of layers of the semi-preg sheets (fiber-reinforced resin sheets) was 13.
- The continuous fibers constituting the semi-preg sheets were oriented in two directions (where the semi-preg sheets were stacked at right angles: 0°/ 90°/ 0°/ 90°/ 0°/ 90°/ 0°/ 90°/ 0°/ 90°/ 0°/ 90°/ 0°).
- The pultruded product (CFRTP) was disposed on the eleventh semi-preg sheet from the bottom, and two semi-preg sheets were placed on top of the pultruded product.

### (2) Vacuum pressure molding

Using the vacuum pressure molding machine illustrated in FIGS. 6 to 8, a rib-reinforced molded product of Example 3 was produced in the following procedure.
- Step 1: A stack of the semi-preg sheets and the CFRTP in accordance with "(1) Stacking conditions" above was placed on the lower die made of nickel alloy. In this case, the stack was placed in the lower die so that the first semi-preg sheet from the bottom in FIG. 18B faced the lower die. Then, the lower die was covered with the bagging film to form a closed space between the bagging film and the lower die, in which a vacuum atmosphere could be created. The bagging film was a silicone rubber sheet with a thickness of 2 mm.
- Step 2: The pressure in the closed space was reduced from the vacuum line of the lower die until the degree of depressurization reached 0.09 MPa. The temperature of the lower die was increased simultaneously with the start of the depressurization.
- Step 3: After the temperature of the lower die reached 205°C (molding temperature), the stack was pressurized at 0.70 MPa with compressed air from above the bagging film, held under pressure for 3 minutes, and subjected to vacuum pressure molding. The step 3 was performed while the pressure conditions in the step 2 were maintained.
- Step 4: The lower die was oooled to 50°C while the pressure conditions in the step 3 were maintained. Then, the vacuum line and the pressure line were disconnected, and the resulting vacuum pressure molded product was demolded.

One cycle of the steps 1 to 4 took 400 seconds.

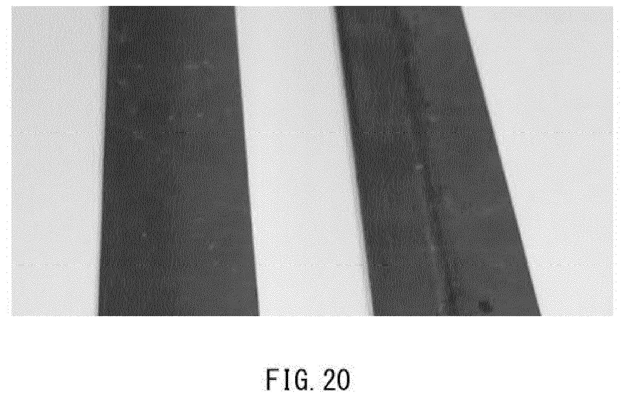

The rib-reinforced molded product of Example 3 included a plurality of base material layers and the pultruded product that were molded in one piece. A ridge that corresponded to the contour of the pultruded product was formed as a reinforcing rib on one principal surface of the rib-reinforced molded product. FIG. 20 is a photograph of the rib-reinforced molded product of Example 3 that was produced as described above. The right side of the photograph was taken from one principal surface of the rib-reinforced molded product and the left side of the photograph was taken from the other principal surface of the rib-reinforced molded product. The ridge of the rib-reinforced molded product of Example 3 had a height h of 2 mm, a width w of 30 mm, a thickness (wall thickness) t of about 1 mm, and a length L of 300 mm (see FIG. 1). There was no warp in this molded product, and the ridge was formed by embedding the pultruded product containing reinforcing fibers in the molded product. Therefore, the ridge itself had high strength and high rigidity, compared to, e.g., a ridge that was formed by injection molding of a thermoplastic resin, so that the rib-reinforced molded product also had high strength and high rigidity.

### Industrial Applicability

In the rib-reinforced molded product of the present invention, the reinforcing rib has high strength and thus exhibits a high reinforcing effect on the molded main body. Therefore, the rib-reinforced molded product of the present invention is useful for a variety of applications such as frames, plates, shelves, wall surfaces, and housings. Moreover, the rib-reinforced molded product of the present invention can be widely used in, e.g., aviation, space, automobiles, sports, three-dimensional printers, industrial applications, building materials, windmills, bicycles, railways, or ships.

### Description of Reference Numerals

1 Carbon fiber sheet
2 Unidirectional carbon fiber
3, 3a, 3b Bridging fiber
4 Resin
5 Portion to which no resin is attached
6 Spreading device
7 Feed bobbin
8 Carbon fiber filament group (unspread carbon fiber tow)
9a, 9b Nip roller
10 Fiberreinforced resin sheet (semi-preg sheet)
12a to 12b Bridge roller
13a to 13g Guide roller
14,17 Powder supply hopper
15,18 Dry powder resin
16,19 Heating device
20 Take-up roller
21a to 21j Spreader roller
23 Roller spreading step
24 Bridging fiber producing step
25 Powder resin applying step
30,40 Fiber-reinforced resin pultruded product
31 Cross section showing impregnation and integration with thermoplastic resin
32,41 to 43 Fiber sheet
33 Guide
34 Heating section
35 Molding section
36 Cooling section
37 Pultrusion die
38a, 38b Pulling roller
39 Blade
51a to 51g Rib-reinforced molded product
52 Molded main body
53a to 53j Reinforcing rib
60 Vacuum pressure molding machine
64 Vacuum line
63 Lower die
69 Upper die
70 Pressure line
80 In-mold (injection) molding machine
81 Upper die
82 Lower die
83a to 83c Groove
84 Injection port
85a to 85c Reinforcing rib
90 Stack
100 Resin containing sheet
500 Rib-reinforced molded product
510 One principal surface of rib-reinforced molded product
520 Base material layer
530 Ridge (reinforcing rib)
540 Laminated base material
300 Rib member
900 Stack

## Claims

1. A rib-reinforced molded product comprising an integrally molded product of a reinforcing rib and a molded main body containing a resin,
wherein the reinforcing rib contains reinforcing fibers and a thermoplastic resin, and
the reinforcing fibers include continuous fibers that are arranged in a longitudinal direction of the reinforcing rib.

2. The rib-reinforced molded product according to claim 1, wherein the reinforcing rib protrudes from one principal surface of the molded main body.

3. The rib-reinforced molded product according to claim 1, wherein the molded main body is a laminated base material composed of a plurality of base material layers, each of which contains a resin,
the reinforcing rib is a rib member that is disposed inside the laminated base material and
a ridge that corresponds to a contour of the rib member is formed on one principal surface of the rib-reinforced molded product.

4. The rib-reinforced molded product according to any one of claims 1 to 3, wherein the reinforcing rib is a fiber-reinforced resin pultruded product.

5. The rib-reinforced molded product according to claim 4, wherein the fiberreinforced resin pultruded product is configured such that a fiber sheet containing the reinforcing fibers and the thermoplastic resin is folded into an irregular shape, and the thermoplastic resin fills an inside of the folded fiber sheet and spaces between overlapping portions of the folded fiber sheet and is integrated with the fiber sheet

6. The rib-reinforced molded product according to claim 1, wherein the molded main body contains strengthening fibers, and the strengthening fibers are at least either or both of short fibers and continuous fibers.

7. The rib-reinforced molded product according to claim 6, wherein the molded main body is composed of multiple layers of fiber-reinforced resin sheets that are integrated together, each of the fiber-reinforced resin sheets containing the strengthening fibers.

8. The rib-reinforced molded product according to claim 3, wherein each of the base material layers is made of at least one resin containing sheet selected from the group consisting of a resin sheet and a fiber-reinforced resin sheet containing strengthening fibers.

9. The rib-reinforced molded product according to any one of claims 6 to 8, wherein the strengthening fibers include at least one type of fibers selected from the group consisting of carbon fibers, glass fibers, and highly elastic fibers with an elastic modulus of 380 cN/dtex or more.

10. The rib-reinforced molded product according to any one of claims 1 to 9, wherein the reinforcing fibers include at least one type of fibers selected from the group consisting of carbon fibers, glass fibers, and highly elastic fibers with an elastic modulus of 380 cN/dtex or more.

11. The rib-reinforced molded product according to any one of claims 1 to 10, wherein the reinforcing rib is at least one type of rod selected from the group consisting of a square rod, a round rod, a flat rod, and a plate-like rod.

12. A method for producing the rib-reinforced molded product according to claim 1 and any one of claims 2, 4 to 7, and 10 to 11, which depend from claim 1,
the method comprising:
performing vacuum pressure molding or injection molding, thereby molding a molded main body and a reinforcing rib in one piece,
wherein the vacuum pressure molding includes: heating and softening a stack in which a reinforcing rib is disposed on a material that makes up a molded main body containing a resin; vacuum molding the stack in a lower die having a vacuum line; and pressure pressing the stack with compressed air supplied from an upper die having a pressure line to the lower die, and
wherein the injection molding includes: positioning the reinforcing rib in a cavity of a molding die; and subsequently injecting the material that makes up a molded main body, including a molten resin, into the cavity.

13. The method according to claim 12, wherein the reinforcing rib is a fiber-reinforced resin pultruded product that has been formed using a fiber sheet, and
the fiber sheet is a semi-preg sheet in which a thermoplastic powder resin is fused to a fiber surface of unidirectional continuous fibers that are obtained by spreading a group of continuous fibers and aligning the continuous fibers in parallel in one direction,
the method comprising the following:
converging the fiber sheet and feeding the converged fiber sheet into a heating section of a pultrusion die;
compressing the fiber sheet while heating the fiber sheet to a temperature equal to or higher than a melting point or a resin flow temperature of the thermoplastic resin in the heating section;
molding the compressed fiber sheet into a shape of an inner cavity of a molding section of the pultrusion die;
cooling the molded product in a cooling section of the pultrusion die; and
pulling a pultruded product thus obtained out of the pultrusion die.

14. The method according to claim 12 or 13, wherein the molded main body is composed of multiple layers of fiber-reinforœd resin sheets that are integrated together, each of the fiber reinforced resin sheets containing the strengthening fibers, and
each of the fiber-reinforced resin sheets is a semi-preg sheet in which a thermoplastic powder resin is fused to a surface of unidirectional continuous fibers that are obtained by spreading a group of continuous fibers and aligning the continuous fibers in parallel in one direction.

15. A method for producing the rib-reinforced molded product according to claim 3 or 8,
the method comprising:
arranging a plurality of base material sheets in layers, each of which is a material of a base material layer that contains a resin and makes up a molded main body;
disposing a rib member as a reinforcing rib between any two adjacent layers of the base material sheets, the rib member containing reinforcing fibers and a thermoplastic resin; and
molding the rib member and the layered base material sheets in one piece by vacuum molding, pressure molding, or vacuum pressure molding so that a ridge that corresponds to a contour of the rib member is formed on one principal surface of the rib-reinforced molded product.

16. The method according to claim 15, wherein the rib member is a fiber-reinforced resin pultruded product that has been formed using a fiber sheet, and
the fiber sheet is a semi-preg sheet in which a thermoplastic powder resin is fused to a fiber surface of unidirectional continuous fibers that are obtained by spreading a group of continuous fibers and aligning the continuous fibers in parallel in one direction,
the method comprising the following:
converging the fiber sheet and feeding the converged fiber sheet into a heating section of a pultrusion die;
compressing the fiber sheet while heating the fiber sheet to a temperature equal to or higher than a melting point or a resin flow temperature of the thermoplastic resin in the heating section;
molding the compressed fiber sheet into a shape of an inner cavity of a molding section of the pultrusion die;
cooling the molded product in a oooling section of the pultrusion die; and
pulling a pultruded product thus obtained out of the pultrusion die.

17. The method according to claim 15 or 16, wherein each of the base material sheets is a semi-preg sheet in which a thermoplastic powder resin is fused to a surface of unidirectional continuous fibers that are obtained by spreading a group of continuous fibers and aligning the continuous fibers in parallel in one direction.
